# DEMANDE DE BREVET EUROPEEN

(11) **EP 3 171 192 A1**
(43) Date de publication de la demande: **24.05.2017**
(21) Numéro de dépôt: 15195139.9
(22) Date de dépôt: 18.11.2015
(51) Int. Cl.: G01S 3/04, G01S 5/02, G01S 5/04, G01S 3/48

(54) **PROCEDE DE LOCALISATION D'UNE BALISE PAR ANGLES D'ARRIVEE**

(71) Demandeur: The Swatch Group Research and Development Ltd., 2074 Marin (CH)
(72) Inventeur: Casagrande, Arnaud, 2014 Bôle (CH)
(74) Mandataire: Goulette, Ludivine

(57) **Abrégé**

Le procédé de localisation d'une balise (X) consiste à réaliser R séquences, R étant un nombre entier supérieur ou égal à 2, chacune comprenant une réception, sur un premier réseau d'antennes (A₁) et un deuxième réseau d'antennes (A₂), d'un signal provenant de la balise (X), les signaux des R séquences étant de longueurs d'onde différentes, et un calcul d'une première fonction d'estimation d'angles d'arrivée du signal sur le premier réseau d'antennes (A₁) et d'une deuxième fonction d'estimation d'angles d'arrivée du signal sur le deuxième réseau d'antennes (A₂), et à réaliser une corrélation des R premières fonctions d'estimation entre elles, et des R deuxièmes fonctions d'estimation entre elles, pour déterminer respectivement un premier angle (ϕ₁) entre la balise (X) et le premier réseau (A₁), et un deuxième angle (ϕ₂) entre la balise (X) et le deuxième réseau (A₂).

## Description

### DOMAINE DE L'INVENTION

L'invention se rapporte au domaine technique des dispositifs et procédés de localisation de balises (« beacons » selon la terminologie anglo-saxonne). On appelle balise tout dispositif utilisé à des fins de localisation, repérable et identifiable par des moyens appropriés.

### ETAT DE LA TECHNIQUE ANTERIEURE

Il est connu de localiser une balise en calculant des directions de propagation d'un signal radiofréquence provenant de la balise et incident sur au moins deux réseaux d'antennes. Cette technique est connue sous le nom de localisation par angles d'arrivée. Dans ce contexte, de nombreux algorithmes ont été développés pour estimer un angle d'arrivée d'un signal sur un réseau d'antennes. Ces algorithmes permettent plus précisément de calculer des fonctions associant des probabilités à des angles d'arrivée du signal sur le réseau d'antennes.

On connaît par exemple l'algorithme MUSIC (abréviation de « Multiple Signal Classification »), décrit par R. O. Schmidt dans l'article « Multiple emitter location and signal parameter estimation », IEEE Trans. Antennas & Propagation, vol. 34, no. 3, March 1986. Cet algorithme permet une résolution spatiale élevée et est relativement simple à mettre en oeuvre, mais est particulièrement coûteux en calculs. On connaît également l'algorithme Beamforming Spatial Filtering, décrit par Barry D. Van Veen and Kevin M. Buckley dans l'article « Beamforming: A Versatile Approach to Spatial Filtering », IEEE ASSP magazine April 1988. Cet algorithme permet une résolution nettement plus faible que l'algorithme MUSIC, mais est moins coûteux en calculs.

La technique de localisation par angles d'arrivée est bien adaptée aux environnements ouverts dans lesquels le signal emprunte principalement des trajets directs entre la balise et les réseaux d'antennes. Toutefois, cette technique est limitée en intérieur, l'onde empruntant alors des chemins multiples, notamment à cause de réflexions sur des perturbateurs environnants. La fonction d'estimation d'angles d'arrivée présente ainsi une pluralité de pics qu'il est difficile d'attribuer à un chemin direct ou à un chemin issu de réflexions.

### RESUME DE L'INVENTION

L'invention propose donc un procédé de localisation par angles d'arrivée, performant dans un environnement présentant de nombreux éléments réflecteurs.

A cet effet, l'invention propose un procédé de localisation d'une balise, comprenant :
- R séquences, R étant un nombre entier supérieur ou égal à 2, chacune comprenant :
   ▪Une réception, par un premier réseau d'antennes et un deuxième réseau d'antennes, d'un signal provenant de la balise, les signaux des R séquences étant de longueurs d'onde différentes
   ▪Un calcul d'une première fonction d'estimation d'angles d'arrivée du signal sur le premier réseau d'antennes et d'une deuxième fonction d'estimation d'angles d'arrivée du signal sur le deuxième réseau d'antennes
- Une corrélation des R premières fonctions d'estimation entre elles, et des R deuxièmes fonctions d'estimation entre elles, pour déterminer respectivement un premier angle entre la balise et le premier réseau, et un deuxième angle entre la balise et le deuxième réseau.

L'invention tire profit de la constatation suivante : la puissance réfléchie d'un signal incident sur un élément réflecteur dépend de l'écart entre la longueur d'onde du signal et les dimensions de l'élément. Plus précisément, plus les dimensions de l'élément sont proches de la longueur d'onde du signal, plus la puissance réfléchie est élevée. En effet, l'élément réflecteur joue le rôle d'une antenne secondaire réémettant le signal incident. Ainsi, en choisissant les longueurs d'onde des signaux émis par la balise proches des dimensions typiques des éléments réflecteurs de l'environnement dans lequel le procédé est mis en oeuvre, on s'assure que les éléments réflecteurs réfléchissent fortement des signaux différents. En d'autres termes, les signaux émis par la balise ne se reflètent pas autant sur les différents réflecteurs.

Or une fonction d'estimation d'angles d'arrivée d'un signal sur un réseau d'antennes, c'est-à-dire une fonction associant des probabilités à des angles d'arrivée du signal sur le réseau, présente non seulement un pic de probabilité pour l'angle correspondant au chemin de transmission direct entre la balise et ledit réseau, mais également des pics de probabilité pour les angles correspondant à des chemins issus de réflexions sur les éléments réflecteurs de l'environnement dans lequel se trouve la balise. Les R premières fonctions d'estimation comportent donc toutes un pic de probabilité pour un angle particulier - l'angle correspondant au chemin de transmission direct, appelé premier angle -, et des pics de probabilité pour des angles différents en fonction des longueurs d'ondes. La corrélation des R premières fonctions d'estimation permet donc de discriminer l'angle correspondant au chemin de transmission direct. De même, les R deuxièmes fonctions d'estimation comportent toutes un pic de probabilité pour un angle particulier - l'angle correspondant au chemin de transmission direct, appelé deuxième angle -, et des pics de probabilité pour des angles différents en fonction des longueurs d'ondes. La corrélation des R deuxièmes fonctions d'estimation permet donc de discriminer l'angle correspondant au chemin de transmission direct.

Outre les caractéristiques qui viennent d'être évoquées le procédé selon l'invention peut présenter une ou plusieurs caractéristiques complémentaires parmi les suivantes, considérées individuellement ou selon toutes les combinaisons techniquement possibles.

Dans un mode de réalisation non limitatif, une séquence comporte une étape d'acquisition du signal, par chaque récepteur parmi des premiers récepteurs connectés à des premiers capteurs du premier réseau d'antennes. De plus, au moins une acquisition par un premier récepteur comporte une première phase d'acquisition du signal capté par l'un des capteurs d'un couple de premiers capteurs, suivie d'une deuxième phase d'acquisition du signal capté par l'autre des capteurs dudit couple.

Dans un mode de réalisation non limitatif, une séquence comporte une étape d'acquisition du signal, par chaque récepteur parmi des deuxièmes récepteurs connectés à des deuxièmes capteurs du deuxième réseau d'antennes. De plus, au moins une acquisition par un deuxième récepteur comporte une première phase d'acquisition du signal capté par l'un des capteurs d'un couple de deuxièmes capteurs, suivie d'une deuxième phase d'acquisition du signal capté par l'autre des capteurs dudit couple.

Dans ces deux modes de réalisation, au moins un récepteur est associé à un couple de capteurs. Durant une première phase, le récepteur réalise l'acquisition du signal capté par un des capteurs du couple de capteurs ; durant une deuxième phase, le récepteur réalise l'acquisition du signal capté par l'autre capteur du couple de capteurs. Si les deux acquisitions sont réalisées à des moments très proches l'un de l'autre, on peut faire l'hypothèse que la position de la balise est sensiblement constante entre les deux acquisitions. Le récepteur est donc mutualisé, ce qui permet de réduire le nombre total de récepteurs nécessaires pour localiser la balise. En effet, selon l'art antérieur, un récepteur par capteur est utilisé. Selon l'invention, un nombre réduit de récepteurs réalise donc des acquisitions simultanément, ce qui entraîne une diminution de la puissance instantanée nécessaire pendant une phase d'acquisition. Naturellement, plus le nombre de récepteurs mutualisé est élevé, plus la puissance instantanée nécessaire est faible.

Dans un mode de réalisation non limitatif, le signal capté par au moins un premier capteur est acquis durant une première phase d'acquisition et durant une deuxième phase d'acquisition.

Dans un mode de réalisation non limitatif, le signal capté par au moins un deuxième capteur est acquis durant une première phase d'acquisition et durant une deuxième phase d'acquisition.

Le signal incident sur au moins un capteur est donc acquis à la fois pendant la première phase d'acquisition et pendant la deuxième phase d'acquisition. De plus, le signal est avantageusement acquis par un même récepteur. Cela permet de corréler correctement les acquisitions réalisées durant la première phase, et les acquisitions réalisées durant la deuxième phase.

Dans un mode de réalisation non limitatif, la corrélation des R premières fonctions d'estimation comporte un calcul, pour chaque angle d'une pluralité d'angles, d'une moyenne des probabilités associées audit angle par lesdites R premières fonctions d'estimation, l'angle présentant la moyenne la plus élevée étant l'angle entre la balise et le premier réseau, c'est-à-dire le premier angle.

Dans un mode de réalisation non limitatif, la corrélation des R deuxièmes fonctions d'estimation comporte un calcul, pour chaque angle d'une pluralité d'angles, d'une moyenne des probabilités associées audit angle par lesdites R deuxièmes fonctions d'estimation, l'angle présentant la moyenne la plus élevée étant l'angle entre la balise et le deuxième réseau, c'est-à-dire le deuxième angle.

Il s'agit d'une manière simple de calculer l'angle correspondant au chemin de transmission direct : l'angle correspondant au chemin de transmission direct est le seul présentant une probabilité moyenne élevée, puisque pour cet angle, un pic de probabilités est présent sur les fonctions d'estimations.

Dans un mode de réalisation non limitatif, une acquisition par un premier récepteur comprend :
- Une estimation d'une dérive de fréquence entre ledit premier récepteur et la balise,
- Une génération d'un vecteur comprenant une phase et une amplitude du signal reçu par un premier capteur connecté audit premier récepteur, au moyen de la dérive estimée,
les vecteurs étant utilisés pour calculer les fonctions d'estimation.

Dans un mode de réalisation non limitatif, une acquisition par un deuxième récepteur comprend :
- Une estimation d'une dérive de fréquence entre ledit deuxième récepteur et la balise,
- Une génération d'un vecteur comprenant une phase et une amplitude du signal reçu par un deuxième capteur connecté audit deuxième récepteur, au moyen de la dérive estimée,
les vecteurs étant utilisés pour calculer les fonctions d'estimation.

Ces deux modes de réalisation sont particulièrement avantageux lorsqu'un algorithme de type Beamforming Spatial Filtering, précédemment évoqué, est mis en oeuvre pour calculer les fonctions d'estimation d'angles d'arrivée. Cet algorithme requiert en effet pour paramètres des vecteurs de phases et d'amplitudes des signaux incidents sur les capteurs d'un réseau d'antennes. Les phases et amplitudes sont par exemple calculées grâce aux spectres fréquentiels en phase et en amplitude des signaux reçus. Or il importe de distinguer les signaux du bruit sur ces spectres fréquentiels, afin d'identifier les raies caractéristiques des signaux émis par la balise. Connaître les dérives de fréquence entre les récepteurs et la balise (l'émetteur des signaux) permet de d'identifier avec précision ces raies. La connaissance des dérives de fréquence permet en outre de filtrer le bruit des signaux reçus en appliquant aux signaux reçus des filtres à bande passante étroite adaptés. Cette connaissance est également fort utile lorsque l'algorithme MUSIC, précédemment évoqué, est utilisé, et que le signal transmis par la balise n'est pas modulé (porteuse pure). Le filtrage bande étroite permet de rejeter tout bruit large bande (non corrélé, donc générateur d'erreur de calcul) et de ne garder que l'information utile (les différentes phases et amplitudes des versions de la porteuse pure obtenues sur les antennes).

Dans un mode de réalisation non limitatif, le procédé comporte une localisation de la balise à partir du premier angle et du deuxième angle.

En outre, l'invention propose un dispositif de localisation d'une balise, comportant :
- Un premier réseau d'antennes et un deuxième réseau d'antennes configurés pour recevoir R signaux de fréquences porteuses distinctes, provenant de la balise
- Des moyens d'acquisitions et de calculs configurés pour :
   ▪calculer des fonctions d'estimation d'angles d'arrivée des signaux sur le premier réseau d'antennes et sur le deuxième réseau d'antennes
   ▪corréler les fonctions d'estimation pour déterminer un premier angle entre la balise et le premier réseau, et un deuxième angle entre la balise et le deuxième réseau.

Outre les caractéristiques qui viennent d'être évoquées, le dispositif selon l'invention peut présenter une ou plusieurs caractéristiques complémentaires parmi les suivantes, considérées individuellement ou selon toutes les combinaisons techniquement possibles.

Dans un mode de réalisation non limitatif, les moyens d'acquisitions et de calculs comportent :
- des premiers récepteurs connectés à des premiers capteurs du premier réseau d'antennes, configurés pour réaliser des acquisitions des signaux captés par les premiers capteurs auxquels ils sont connectés
- au moins un commutateur pour connecter un premier récepteur à l'un des capteurs d'un couple de premiers capteurs durant une première phase d'acquisition d'un signal, et à l'autre des capteurs dudit couple durant une deuxième phase d'acquisition dudit signal.

Dans un mode de réalisation non limitatif, les moyens d'acquisitions et de calculs comportent :
- des deuxièmes récepteurs connectés à des deuxièmes capteurs du deuxième réseau d'antennes, configurés pour réaliser des acquisitions des signaux captés par les deuxièmes capteurs auxquels ils sont connectés
- au moins un commutateur pour connecter un deuxième récepteur à l'un des capteurs d'un couple de deuxièmes capteurs durant une première phase d'acquisition d'un signal, et à l'autre des capteurs dudit couple durant une deuxième phase d'acquisition dudit signal.

Dans un mode de réalisation non limitatif, les moyens d'acquisitions et de calculs sont configurés pour calculer, pour chaque angle d'une pluralité d'angles, une moyenne des probabilités associées audit angle par des fonctions d'estimation, et sélectionner l'angle présentant la moyenne la plus élevée.

Dans un mode de réalisation non limitatif, les moyens d'acquisitions et de calculs sont configurés pour :
- estimer une dérive de fréquence entre un premier récepteur et la balise,
- générer des vecteurs, chaque vecteur comprenant une phase et une amplitude d'un signal reçu par un premier capteur connecté au premier récepteur, au moyen de la dérive estimée entre ledit premier récepteur et la balise.

Dans un mode de réalisation non limitatif, les moyens d'acquisitions et de calculs sont configurés pour :
- estimer une dérive de fréquence entre un deuxième récepteur et la balise
- générer des vecteurs, chaque vecteur comprenant une phase et une amplitude d'un signal reçu par un deuxième capteur connecté au deuxième récepteur, au moyen de la dérive estimée entre ledit deuxième récepteur et la balise.

Dans un mode de réalisation non limitatif, les moyens d'acquisitions et de calculs sont configurés pour localiser la balise à partir du premier angle et du deuxième angle.

L'invention et ses différentes applications seront mieux comprises à la lecture de la description détaillée qui suit, et à l'examen des figures qui l'accompagnent.

### BREVE DESCRIPTION DES DESSINS

Les buts, avantages et caractéristiques du procédé et du dispositif de localisation d'une balise apparaîtront mieux dans la description suivante sur la base de formes d'exécution non limitatives illustrées par les dessins sur lesquels :
la figure 1 représente schématiquement un dispositif de localisation d'une balise selon un mode de réalisation de l'invention, comprenant un premier et un deuxième réseaux d'antennes,
la figure 2 représente un graphique de deux premières fonctions d'estimation d'angles d'arrivée de signaux émis par la balise, incidents sur le premier réseau d'antennes,
la figure 3 représente un graphique de deux deuxièmes fonctions d'estimation d'angles d'arrivée de signaux émis par la balise, incidents sur le deuxième réseau d'antennes,
la figure 4 représente schématiquement le premier réseau d'antennes et une unité d'acquisitions et de calculs connectée audit premier réseau,
la figure 5 représente schématiquement le premier réseau d'antennes durant une première phase d'acquisitions et une deuxième phase d'acquisitions, et
la figure 6 représente un diagramme en bloc d'étapes d'un procédé de localisation de la balise selon un mode de réalisation de l'invention.

### DESCRIPTION DETAILLEE DE L'INVENTION

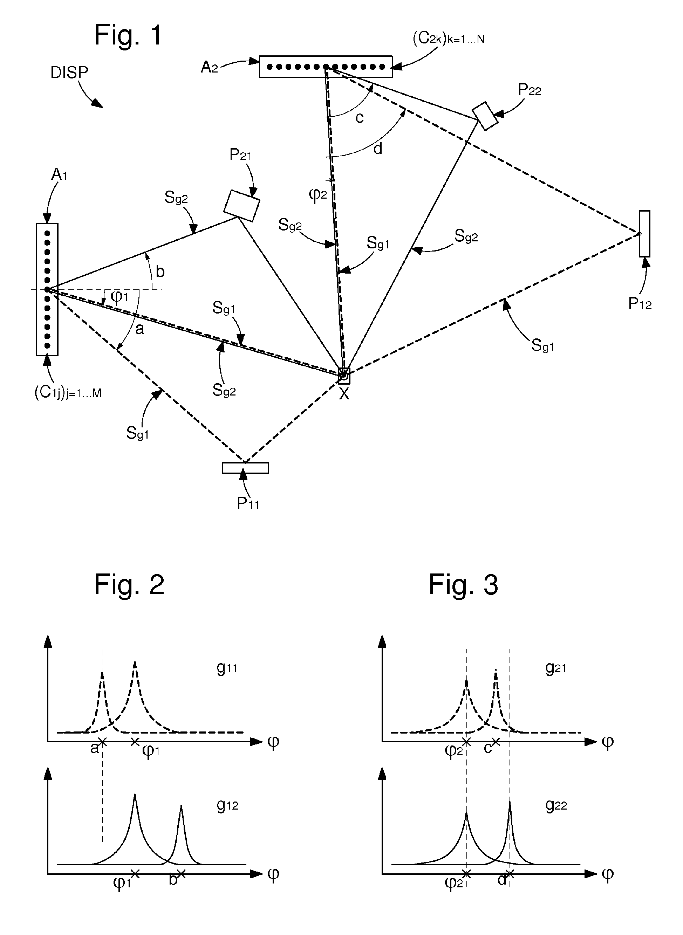

L'invention vise à localiser une balise X se trouvant dans un environnement comportant une pluralité d'éléments réflecteurs, dont quatre sont représentés à titre d'exemple sous les références P₁₁, P₁₂, P₂₁ et P₂₂. Dans un environnement quelconque, les éléments réflecteurs présentent vraisemblablement des dimensions différentes, comme cela est illustré sur la figure 1.

La balise X est configurée pour émettre R signaux (Sgᵢ)_{i=1..R} de longueurs d'onde (λᵢ)_{i=1..R} distinctes, R étant un nombre entier supérieur ou égal à 2. Pour simplifier la lecture de la figure 1, seuls deux signaux Sg₁ et Sg₂, respectivement de longueur d'onde λ₁ et λ₂, sont représentés. Les signaux (Sgᵢ)_{i=1..R} émis par la balise X se réfléchissent plus ou moins sur les éléments réflecteurs, en fonction de leur longueur d'onde. Un élément perturbateur de dimensions proches de la longueur d'onde d'un signal réfléchit en effet particulièrement ledit signal, mais réfléchit peu un signal de longueur d'onde éloignée de ses dimensions. Naturellement, les dimensions d'un élément auxquelles il est fait référence sont celles de la surface de l'élément sur lequel le signal est incident.

Ainsi, dans l'exemple représenté à la figure 1 :
- Les éléments réflecteurs P₁₁ et P₁₂ réfléchissent fortement le premier signal Sg₁, mais peu le deuxième signal Sg₂. On néglige donc les réflexions du deuxième signal Sg₂ sur les éléments réflecteurs P₁₁ et P₁₂.
- Les éléments réflecteurs P₂₁ et P₂₂ réfléchissent fortement le deuxième signal Sg₂, mais peu le premier signal Sg₁. On néglige donc les réflexions du premier signal Sg₁ sur les éléments réflecteurs P₂₁ et P₂₂.

Un dispositif DISP selon l'invention permet de localier la balise X. Le dispositif DISP comporte notamment :
- Un premier réseau d'antennes A₁ comportant M capteurs (C₁ⱼ)_{j=1..M}, M étant un nombre entier supérieur ou égal à 2.
- Un deuxième réseau d'antennes A₂ comportant N capteurs (C₂ₖ)_{k=1..N}, N étant un nombre entier supérieur ou égal à 2.

Lorsqu'ils se propagent en chemin direct entre la balise X et le premier réseau d'antennes A₁, le premier signal Sg₁ et le deuxième signal Sg₂ sont incidents sur le premier réseau d'antennes A₁ selon un premier angle ϕ₁. Lorsqu'ils se propagent en chemin direct entre la balise X et le deuxième réseau d'antennes A₂, le premier signal Sg₁ et le deuxième signal Sg₂ sont incidents sur le deuxième réseau d'antennes A₂ selon un deuxième angle ϕ₂. Par chemin direct, on entend un chemin sur lequel ne se trouve pas d'obstacle.

En outre :
- Le premier signal Sg₁ est incident sur le premier réseau d'antennes A₁ selon un angle a, lorsqu'il est réfléchi sur l'élément réflecteur P₁₁.
- Le deuxième signal Sg₂ est incident sur le premier réseau d'antennes A₁ selon un angle b, lorsqu'il est réfléchi sur l'élément réflecteur P₂₁.
- Le premier signal Sg₁ est incident sur le deuxième réseau d'antennes A₂ selon un angle c, lorsqu'il est réfléchi sur l'élément réflecteur P₁₂.
- Le deuxième signal Sg₂ est incident sur le deuxième réseau d'antennes A₂ selon un angle d, lorsqu'il est réfléchi sur l'élément réflecteur P₂₂.

Le dispositif DISP comporte également des moyens d'acquisitions et de calculs (non représentés sur la figure 1), comportant deux unités, chacune étant reliée à un réseau d'antennes A₁, A₂. Une unité d'acquisition et de calculs permet de calculer, pour un signal donné, des probabilités d'angle d'incidence du signal sur le réseau d'antennes auquel elle est reliée. Naturellement, à cause des phénomènes de réflexions, plusieurs angles présentent des probabilités d'incidence élevées.

Les figures 2 et 3 illustrent des fonctions d'estimation d'angles d'incidence. En partie haute de la figure 2 est représentée une fonction d'estimation g₁₁ d'angles d'arrivée du premier signal Sg₁ sur le premier réseau d'antennes A₁. On note que la fonction d'estimation g₁₁ présente deux pics : un premier pic pour l'angle a, correspondant au chemin réfléchi du premier signal Sg₁ sur l'élément réflecteur P₁₁ ; un deuxième pic pour le premier angle ϕ₁, correspondant au chemin direct du premier signal Sg₁ entre la balise X et le premier réseau d'antennes A₁.

En partie basse de la figure 2 est représentée une fonction d'estimation g₁₂ d'angles d'arrivée du deuxième signal Sg₂ sur le premier réseau d'antennes A₁. On note que la fonction d'estimation g₁₂ présente deux pics : un premier pic pour le premier angle ϕ₁, correspondant au chemin direct du deuxième signal Sg₂ entre la balise X et le premier réseau d'antennes A₁ ; un deuxième pic pour l'angle b, correspondant au chemin réfléchi sur l'élément réflecteur P₂₁ du deuxième signal Sg₂.

En partie haute de la figure 3 est représentée une fonction d'estimation g₂₁ d'angles d'arrivée du premier signal Sg₁ sur le deuxième réseau d'antennes A₂. On note que la fonction d'estimation g₂₁ présente deux pics : un premier pic pour le deuxième angle ϕ₂, correspondant au chemin direct du premier signal Sg₁ entre la balise X et le deuxième réseau d'antennes A₂ ; un deuxième pic pour l'angle c, correspondant au chemin réfléchi sur l'élément réflecteur P₁₂ du premier signal Sg₁.

En partie basse de la figure 3 est représentée une fonction d'estimation g₂₂ d'angles d'arrivée du deuxième signal Sg₂ sur le deuxième réseau d'antennes A₂. On note que la fonction d'estimation g₂₂ présente deux pics : un premier pic pour le deuxième angle ϕ₂, correspondant au chemin direct du deuxième signal Sg₂ entre la balise X et le deuxième réseau d'antennes A₂ ; un deuxième pic pour l'angle d, correspondant au chemin réfléchi sur l'élément réflecteur P₂₂ du deuxième signal Sg₂.

Les fonctions d'estimation g₁₁ et g₁₂ présentent donc toutes deux un pic pour le premier angle ϕ₁, tandis que les fonctions d'estimation g₂₁ et g₂₂ présentent toutes deux un pic pour le deuxième angle ϕ₂. Ainsi, en corrélant les fonctions d'estimation g₁₁ et g₁₂, respectivement les fonctions d'estimation g₂₁ et g₂₂, il est possible de déterminer le premier angle ϕ₁, respectivement le deuxième angle ϕ₂.

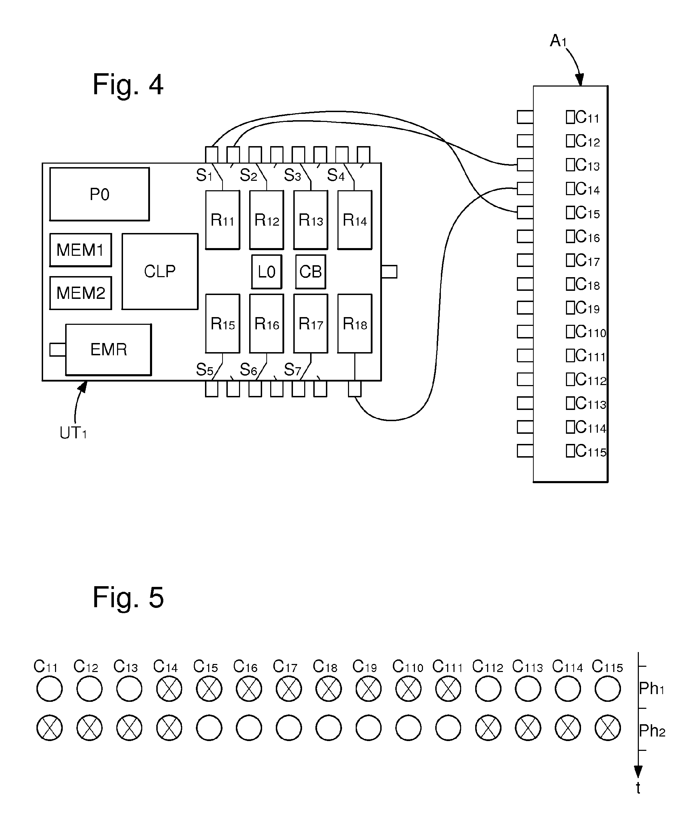

La figure 4 montre le premier réseau d'antennes A₁ et une première unité UT₁ d'acquisitions et de calculs connectée audit premier réseau A₁. Dans l'exemple représenté à la figure 4, le premier réseau d'antennes A₁ comporte 15 premiers capteurs (C₁ⱼ)_{j=1..15}, et la première unité UT₁ comporte 8 premiers récepteurs (R₁ₚ)_{p=1..8}. Plus généralement, la première unité UT₁ comporte S premiers récepteurs (R₁ₚ)_{p=1..S}, où S est un nombre entier supérieur ou égal à 2 tel que M=2S-1.

Le réseau d'antennes A₁ comporte un connecteur, par exemple de type SMA, par capteur C₁ⱼ. Par ailleurs, l'unité UT₁ comporte deux connecteurs et un commutateur Sₚ par récepteur R₁ₚ, excepté pour un récepteur (le 8^{ème} récepteur R₁₈ dans l'exemple de la figure 4) qui n'est associé qu'à un connecteur. Ainsi, chaque récepteur R₁ₚ est apte à être connecté alternativement à deux capteurs C₁ⱼ différents via le commutateur Sₚ qui lui est associé, excepté l'un des récepteurs R₁₈. On note que sur la figure 4, seules trois liaisons filaires sont représentées : les connecteurs du 1^{er} récepteur R₁₁ sont montrés reliés au connecteur du 3^{ème} capteur C₁₃ et au connecteur du 5^{ème} capteur C₁₅ ; le connecteur du 8^{ème} récepteur R₁₈ est montré relié au connecteur du 4^{ème} capteur C₁₄.

La figure 5 montre les états des 15 premiers capteurs (C₁ⱼ)_{j=1..15} de la figure 4, lors de deux phases d'acquisitions. Dans une première phase d'acquisitions Ph1, les commutateurs (Sₚ)_{p=1..7} sont dans l'état montré à la figure 3, et les capteurs connectés à des récepteurs sont alors les capteurs 4 à 11. Dans une deuxième phase d'acquisition Ph2, la position des commutateurs (Sₚ)_{p=1..7} est modifiée, et les capteurs connectés à des récepteurs sont alors les capteurs 1 à 4 et 12 à 15. On note que le 4^{ème} capteur C₁₄ est connecté au 8^{ème} récepteur R₁₈ durant les deux phases d'acquisitions Ph1, Ph2.

L'unité UT₁ comporte également un oscillateur local LO apte à fournir aux premiers récepteurs (R₁ₚ)_{p=1..8} une fréquence fₚ. En effet, lorsqu'un capteur C₁ⱼ capte un signal Sgᵢ de fréquence fᵢ provenant de la balise X, ledit signal Sgᵢ subit le traitement suivant au sein du récepteur R₁ₚ connecté au capteur C₁ⱼ. Pour commencer, le signal Sgᵢ est mélangé en parallèle à deux signaux en quadrature à la fréquence fₚ, pour obtenir des composantes aux fréquences fᵢ, fₚ et fᵢ+fₚ, et une composante à une fréquence dite intermédiaire |fᵢ - fₚ|. Un filtre polyphase ne laisse ensuite passer que la composante à la fréquence intermédiaire, plus basse que la fréquence initiale fᵢ du signal Sgᵢ. Cette composante basse fréquence subit enfin une conversion analogique vers numérique.

L'unité UT₁ comporte également des mémoires MEM1, MEM2, pour stocker les échantillons générés par les premiers récepteurs (R₁ₚ)_{p=1..8}, et un port PO, par exemple de type USB, pour recueillir les échantillons stockés dans les mémoires MEM1, MEM2. L'unité UT₁ comporte également des moyens de calibration CB des voies d'acquisition, pour uniformiser les acquisitions réalisées par les différents récepteurs (R₁ₚ)_{p=1..8}.

L'unité UT₁ comporte également un émetteur-récepteur EMR apte à dialoguer avec la balise X, afin que les récepteurs (R₁ₚ)_{p=1..8} n'acquièrent les signaux (Sgᵢ)_{i=1..R} provenant de la balise X qu'au moment où la balise X les envoie, et non pas en continu, ce qui serait extrêmement consommateur d'énergie. La balise X envoie par exemple les signaux (Sgᵢ)_{i=1..R} sur interrogation de l'émetteur-récepteur EMR, ou bien en prend l'initiative et en informe alors l'émetteur-récepteur EMR.

L'unité UT₁ comporte également un circuit logique programmable CLP, par exemple de type FPGA (« Field-Programmable Gâte Array » selon la terminologie anglo-saxonne) pour commander les autres composants de l'unité UT₁.

Naturellement, dans un mode de réalisation non limitatif, tout ce qui vient d'être présenté en référence au premier réseau d'antennes A₁ est transposable au deuxième réseau d'antennes A₂. Une deuxième unité d'acquisitions et de calculs (non représentée sur les figures) est connectée au deuxième réseau A₂, ladite deuxième unité comportant T deuxièmes récepteurs (R_{2q})_{p=1..T}, T étant un nombre entier supérieur ou égal à 2 tel que N=2T-1. Chaque deuxième récepteur R_{2q} est apte à être connecté alternativement à deux deuxièmes capteurs C₂ₖ différents via un commutateur qui lui est associé, excepté l'un des deuxièmes récepteurs qui est connecté à un unique deuxième capteur.

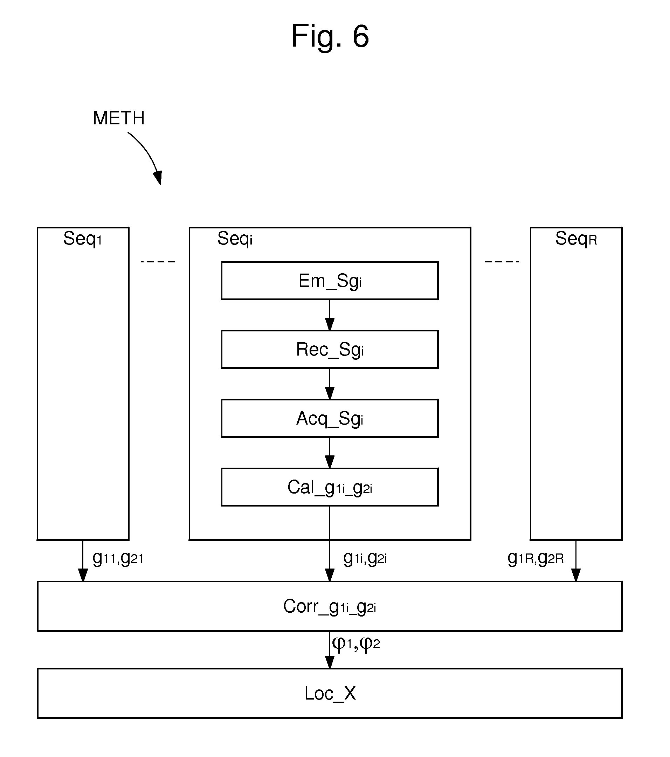

A la figure 6 sont présentées des étapes d'un procédé METH de localisation de la balise X, selon un mode de réalisation non limitatif de l'invention. Le procédé comporte une succession de R séquences (Seqᵢ)_{i=1..R}, chaque séquence Seqᵢ comportant les étapes présentées ci-après.

Selon une étape Em_Sgᵢ de la séquence Seqᵢ, la balise X émet un signal Sgᵢ à une longueur d'onde λᵢ. Les longueurs d'onde (λᵢ)_{i=1..R} des R signaux (Sgᵢ)_{i=1..R} des R séquences (Seqᵢ)_{i=1..R} sont toutes différentes. Les longueurs d'ondes (λᵢ)_{i=1..R} sont avantageusement choisies du même ordre de grandeur que les dimensions classiques des éléments réflecteurs de l'environnement dans lequel se trouve la balise X. En environnement intérieur par exemple, un signal Sgᵢ de fréquence 2,4 GHz est approprié, car sa longueur d'onde est de 12,5 centimètres, ce qui correspond vraisemblablement aux dimensions de certains objets de cet environnement. Les signaux (Sgᵢ)_{i=1..R} sont par exemple des impulsions d'ondes entretenues (« continuous wave » selon la terminologie anglo-saxonne), modulées ou non.

Selon une étape Rec_Sgᵢ de la séquence Seqᵢ, le signal Sgᵢ est capté par les premiers capteurs (C₁ⱼ)_{j=1..M} du premier réseau d'antennes A₁ et les deuxièmes capteurs (C₁ₖ)_{j=1..N} du deuxième réseau d'antennes A₂.

Selon une étape Acq_Sgᵢ de la séquence Seqᵢ, une acquisition du signal Sgi est réalisée par les premiers récepteurs (R₁ₚ)_{p=1..S} et les deuxièmes récepteurs (R_{2q})_{q=1..T}, connectés respectivement au premier réseau d'antennes A₁ et au deuxième réseau d'antennes A₂. Initialement, les commutateurs associés aux premiers récepteurs (R₁ₚ)_{p=1..S} sont tels que les S premiers récepteurs (R₁ₚ)_{p=1..S} sont connectés à S premiers capteurs (C₁ᵥ)_{v=1..S} parmi les M premiers capteurs (C₁ⱼ)_{j=1..M}. De même, initialement, les commutateurs associés aux deuxièmes récepteurs (R_{2q})_{q=1..T} sont tels que les T deuxièmes récepteurs (R_{2q})_{q=1..T} sont connectés à T deuxièmes capteurs (C₂ᵥ)_{v=1..T} parmi les N deuxièmes capteurs (C₂ₖ)_{k=1..N}.

L'étape d'acquisition Acq_Sgᵢ comporte une première phase Ph1 dans laquelle chaque premier récepteur R₁ₚ réalise l'acquisition du signal Sgᵢ capté par le premier récepteur C₁ᵥ auquel il est connecté, et chaque deuxième récepteur R_{2q} réalise l'acquisition du signal Sgᵢ capté par le deuxième récepteur C₂ᵥ auquel il est connecté.

Puis, la position des commutateurs associés aux premiers récepteurs (R₁ₚ)_{p=1..S} et des commutateurs associés aux deuxièmes récepteurs (R_{2q})_{q=1..T} est modifiée. Les premiers récepteurs (R₁ₚ)_{p=1..S} sont alors connectés à S autres premiers capteurs (C_{1w})_{w=1..S} parmi les M premiers capteurs (C₁ⱼ)_{j=1..M}, et les deuxièmes récepteurs (R_{2q})_{q=1..T} sont alors connectés à T autres deuxièmes capteurs (C_{2w})_{w=1..T} parmi les N deuxièmes capteurs (C₂ₖ)_{k=1..N}. Seul un premier capteur reste connecté au même premier récepteur, et un deuxième capteur reste connecté au même deuxième récepteur.

L'étape d'acquisition Acq_Sgᵢ comporte ensuite une deuxième phase Ph2 dans laquelle chaque premier récepteur R₁ₚ réalise l'acquisition du signal Sgᵢ capté par le premier récepteur C_{1w} auquel il est connecté, et chaque deuxième récepteur R_{2q} réalise l'acquisition du signal Sgᵢ capté par le deuxième récepteur C_{2W} auquel il est connecté.

On note qu'il importe de connecter les capteurs non utilisés pendant la première phase et la deuxième phase d'acquisition, à des résistances de 50 Ohms, pour éviter qu'ils ne se comportent comme des réflecteurs et ne faussent le diagramme de rayonnement des autres capteurs.

Comme cela a été expliqué précédemment, chaque acquisition d'un signal Sgᵢ de fréquence fᵢ provenant de la balise X, comporte :
- un mélange en parallèle du signal Sgᵢ à deux signaux en quadrature à la fréquence fₚ, pour obtenir des composantes aux fréquences fᵢ, fₚ et fᵢ+fₚ, et une composante à une fréquence dite intermédiaire |fᵢ - fₚ|,
- un filtrage par un filtre polyphase des composantes, afin de supprimer les composantes aux fréquences fᵢ, fₚ et fᵢ+fₚ et ne garder que la composante à la fréquence intermédiaire, plus basse que la fréquence initiale fᵢ du signal Sgᵢ, et
- une conversion analogique vers numérique de la composante à la fréquence intermédiaire, pour générer une série d'échantillons.

Selon une étape Cal_{_}g_{1i_}g₂ᵢ de la séquence Seqᵢ, une première fonction d'estimation g₁ᵢ d'angles d'arrivée du signal Sgᵢ sur le premier réseau d'antennes A₁, et une deuxième fonction d'estimation g₂ᵢ d'angles d'arrivée du signal Sgᵢ sur le deuxième réseau d'antennes A₂, sont calculées. Ces fonctions sont générées à partir des échantillons générés, par exemple au moyen d'un algorithme MUSIC ou d'un algorithme Beamforming Spatial Filtering précédemment évoqués.

On note que l'algorithme Beamforming Spatial Filtering requiert pour paramètres des vecteurs comportant la phase et l'amplitude de chacun des signaux captés par les capteurs d'un réseau d'antennes. Dans un mode de réalisation dans lequel l'algorithme Beamforming Spatial Filtering est utilisé pour calculer les fonctions d'estimation, chaque acquisition d'un signal Sgᵢ comporte donc une étape de génération d'un vecteur comprenant une phase et une amplitude du signal Sgᵢ reçu.

Dans un mode de réalisation, la phase et l'amplitude du signal Sgᵢ reçu sont calculées par transformée de Fourier de la série d'échantillons. La transformée de Fourier permet en effet d'obtenir un spectre fréquentiel de phase et un spectre fréquentiel d'amplitude d'un signal. Naturellement, sur les spectres fréquentiels, la raie correspondant au signal Sgi doit être distinguée du bruit. Or, si les oscillateurs locaux des récepteurs et l'oscillateur local de la balise sont peu stables, il est vraisemblable qu'ils dérivent en fréquence les uns par rapport aux autres. L'acquisition d'un signal Sgᵢ par un récepteur comporte alors une étape d'estimation de la dérive de fréquence entre ledit récepteur et la balise X, précédant l'étape de génération du vecteur de phase et d'amplitude. La connaissance de cette dérive permet de localiser précisément la raie correspondant au signal sur les spectres fréquentiels de phase et d'amplitude.

Puis, le procédé METH comporte, suite aux R séquences (Seqᵢ)_{i=1..R}, une étape Corr_{_}g_{1i_}g₂ᵢ de corrélation des R premières fonctions d'estimation (g₁ᵢ)_{i=1..R}, et de corrélation des R deuxièmes fonctions d'estimation (g₂ᵢ)_{i=1..R}. La corrélation des R premières fonctions d'estimation (g₁ᵢ)_{i=1..R} permet de déterminer un premier angle ϕ₁ entre la balise X et le premier réseau A₁, tandis que la corrélation des R deuxièmes fonctions d'estimation (g₂ᵢ)_{i=1..R} permet de déterminer un deuxième angle ϕ₂ entre la balise X et le deuxième réseau A₂. Une corrélation est par exemple réalisée par calcul, pour chaque angle d'une pluralité d'angles, d'une moyenne des probabilités associées audit angle par les fonctions d'estimation. L'angle présentant la moyenne la plus élevée est alors l'angle entre la balise X et le réseau considéré. En effet, les premières fonctions d'estimation (g₁ᵢ)_{i=1..R} présentent toutes un pic pour le premier angle ϕ₁, tandis que les deuxièmes fonctions d'estimation (g₂ᵢ)_{i=1..R} présentent toutes un pic pour le deuxième angle ϕ₂.

Le procédé comporte enfin une étape Loc_X de localisation de la balise X, à partir du premier angle ϕ₁ et du deuxième angle ϕ₂

A partir de la description qui vient d'être faite, plusieurs variantes du procédé et dispositif de localisation d'une balise peuvent être conçues par l'homme du métier sans sortir du cadre de l'invention définie par les revendications.

## Revendications

1. Procédé (METH) de localisation d'une balise (X), comprenant :
- R séquences ((Seqᵢ)_{i=1..R}), R étant un nombre entier supérieur ou égal à 2, chacune comprenant :
• une réception (Rec_Sgᵢ), sur un premier réseau d'antennes (A₁) et un deuxième réseau d'antennes (A₂), d'un signal (Sgᵢ) provenant de la balise (X), les signaux ((Sgᵢ)_{i=1..R}) des R séquences ((Seqᵢ)_{i=1..R}) étant de longueurs d'onde ((λᵢ)_{i=1..R}) différentes,
• un calcul (Cal_{_}g_{1i_}g₂ᵢ) d'une première fonction d'estimation (g₁ᵢ) d'angles d'arrivée du signal (Sgᵢ) sur le premier réseau d'antennes (A₁) et d'une deuxième fonction d'estimation (g₂ᵢ) d'angles d'arrivée du signal (Sgᵢ) sur le deuxième réseau d'antennes (A₂)
- une corrélation (Corr_{_}g_{1i_}g₂ᵢ) des R premières fonctions d'estimation ((g₁ᵢ)_{i=1..R}) entre elles, et des R deuxièmes fonctions d'estimation ((g₂ᵢ)_{i=1..R}) entre elles, pour déterminer respectivement un premier angle (ϕ₁) entre la balise (X) et le premier réseau (A₁), et un deuxième angle (ϕ₂) entre la balise (X) et le deuxième réseau (A₂).

2. Procédé (METH) selon la revendication 1, **caractérisé en ce qu'**une séquence (Seqᵢ) comportant une étape d'acquisition (Acq_Sgᵢ) du signal (Sgᵢ), par chaque récepteur (R₁ₚ) parmi des premiers récepteurs ((R₁ₚ)_{p=1..S}) connectés à des premiers capteurs ((C₁ⱼ)_{j=1..M}) du premier réseau d'antennes (A₁), au moins une acquisition par un premier récepteur (R₁ₚ) comportant une première phase (Ph1) d'acquisition du signal (Sgᵢ) capté par l'un des capteurs d'un couple de premiers capteurs, suivie d'une deuxième phase (Ph2) d'acquisition du signal (Sgᵢ) capté par l'autre des capteurs dudit couple.

3. Procédé (METH) selon la revendication 2, **caractérisé en ce que** le signal (Sgᵢ) capté par au moins un premier capteur (C₁ⱼ) étant acquis durant une première phase (Ph1) d'acquisition et durant une deuxième phase (Ph2) d'acquisition.

4. Procédé (METH) selon l'une des revendications précédentes, **caractérisé en ce qu'**une corrélation de R fonctions d'estimation ((g₁ᵢ)_{i=1..R}, (g₂ᵢ)_{i=1..R}) comportant un calcul, pour chaque angle d'une pluralité d'angles, d'une moyenne des probabilités associées audit angle par lesdites R fonctions d'estimation ((g₁ᵢ)_{i=1..R}, (g₂ᵢ)_{i=1..R}), l'angle présentant la moyenne la plus élevée étant l'angle (ϕ₁, ϕ₂) entre la balise (X) et le réseau (A₁, A₂) considéré.

5. Procédé (METH) selon l'une des revendications 2 à 4, une acquisition par un premier récepteur (R₁ₚ) comprenant :
- une estimation d'une dérive de fréquence entre ledit premier récepteur (R₁ₚ) et la balise (X),
- une génération d'un vecteur comprenant une phase et une amplitude du signal (Sgᵢ) reçu par un premier capteur (C₁ⱼ) connecté audit premier récepteur (R₁ₚ), au moyen de la dérive estimée,
les vecteurs étant utilisés pour calculer les fonctions d'estimation.

6. Procédé (METH) selon l'une des revendications précédentes, comportant une localisation de la balise (X) à partir du premier angle (ϕ₁) et du deuxième angle (ϕ₂).

7. Dispositif (DISP) de localisation d'une balise (X), comportant :
- un premier réseau d'antennes (A₁) et un deuxième réseau d'antennes (A₂) configurés pour recevoir R signaux ((Sgᵢ)_{i=1..R}) de fréquences porteuses ((fᵢ)_{i=1..R}) distinctes, provenant de la balise (X), et
- des moyens d'acquisitions et de calculs (UT₁) configurés pour :
• calculer des fonctions d'estimation ((g₁ᵢ)_{i=1..R}, (g₂ᵢ)_{i=1..R}) d'angles d'arrivée (ϕ₁ᵢ, ϕ₂ᵢ) des signaux ((Sgᵢ)_{i=1..R}) sur le premier réseau d'antennes (A₁) et sur le deuxième réseau d'antennes (A₂), et
• corréler les fonctions d'estimation ((g₁ᵢ)_{i=1..R}, (g₂ᵢ)_{i=1..R}) pour déterminer un premier angle (ϕ₁) entre la balise (X) et le premier réseau (A₁), et un deuxième angle (ϕ₂) entre la balise (X) et le deuxième réseau (A₂).

8. Dispositif (DISP) de localisation selon la revendication 7, **caractérisé en ce que** les moyens d'acquisitions et de calculs (UT₁) comportent :
- des premiers récepteurs ((R₁ₚ)_{p=1..S}) connectés à des premiers capteurs ((C₁ⱼ)_{j=1..M}) du premier réseau d'antennes (A₁), configurés pour réaliser des acquisitions des signaux ((Sgᵢ)_{i=1..R}) captés par les premiers capteurs ((C₁ⱼ)_{j=1..M}) auxquels ils sont connectés, et
- au moins un commutateur (Sₚ) pour connecter un premier récepteur (R₁ₚ) à l'un des capteurs (C₁ⱼ) d'un couple de premiers capteurs durant une première phase d'acquisition d'un signal (Sgᵢ), et à l'autre des capteurs dudit couple durant une deuxième phase d'acquisition dudit signal (Sgᵢ).

9. Dispositif (DISP) de localisation selon l'une des revendications 7 et 8, **caractérisé en ce que** les moyens d'acquisitions et de calculs (UT₁) sont configurés pour calculer, pour chaque angle d'une pluralité d'angles, une moyenne des probabilités associées audit angle par des fonctions d'estimation ((g₁ᵢ)_{i=1..R}, (g₂ᵢ)_{i=1..R}), et sélectionner l'angle présentant la moyenne la plus élevée.

10. Dispositif (DISP) de localisation selon la revendication 7, **caractérisé en ce que** les moyens d'acquisitions et de calculs (UT₁) sont configurés pour :
- estimer une dérive de fréquence entre un premier récepteur (R₁ₚ) et la balise (X), et
- générer des vecteurs, chaque vecteur comprenant une phase et une amplitude d'un signal (Sgᵢ) reçu par un premier capteur (C₁ⱼ) connecté au premier récepteur (R₁ₚ), au moyen de la dérive estimée.

11. Dispositif (DISP) selon l'une des revendications 7 à 10, **caractérisé en ce que** les moyens d'acquisitions et de calculs (UT₁) sont configurés pour localiser la balise (X) à partir du premier angle (ϕ₁) et du deuxième angle (ϕ₂).
